# FASCICULE DE BREVET EUROPEEN

(11) **EP 0 650 108 B1**
(45) Date de publication et mention de la délivrance du brevet: **22.04.1998**
(21) Numéro de dépôt: 94402392.8
(22) Date de dépôt: 24.10.1994
(51) Int. Cl.: G05D 7/03

(54) **Dispositif de régulation du débit d'une matière fluide**
Durchflussmengenregelvorrichtung für fliessfähiges Material
Flow regulating device of a fluid material

(30) Priorité: 25.10.1993 FR 9312679
(43) Date de publication de la demande: 26.04.1995
(73) Titulaire: GEC ALSTHOM Stein Industrie, 78140 Velizy-Villacoublay (FR)
(72) Inventeur: Guilleux,Eugène, F-91140 Villebon sur Yvette (FR)
(74) Mandataire: Fournier, Michel

(56) Documents cités:
- DE-U- 8 613 819
- DATABASE WPI Week 0683 Derwent Publications Ltd., London, GB; AN 83-12534K & DE-A-32 11 045 (BRENNSTOFFINST) , 3 Février 1983
- DATABASE WPI Week 3491 Derwent Publications Ltd., London, GB; AN 91-252022 & US-A-5 037 617 (STONE & WEBSTER ENG CORP)

## Description

La présente invention se rapporte à un dispositif de régulation du débit d'une matière fluide et en particulier à une valve de sortie des solides fluidisés d'une chaudière à lit fluidisé.

Elle concerne plus précisément un dispositif de régulation du débit d'une matière fluide comportant un réceptacle d'entrée de la matière comprenant une paroi de fond, recevant la matière déversée à un débit quelconque et la contenant selon un niveau de remplissage et un réceptacle de sortie comprenant une paroi de fond et libérant la matière à un débit régulé par une ouverture de sortie, ces deux réceptacles étant séparés par une paroi commune comportant un bord supérieur.

Des valves mécaniques asservies sont utilisées de manière générale au niveau de la paroi commune pour réaliser une régulation de débit. Or lorsque les conditions de fonctionnement de ces valves relativement défavorables, par exemple lorsqu'elles sont soumises à des conditions thermiques élevées ou fortement variables, il apparaît rapidement des détériorations entraînant des phénomènes de d'usure et de coincement.

La présente invention propose un dispositif de régulation de débit particulièrement simple et particulièrement résistant aux conditions de fonctionnement.

Pour ce faire, conformément à l'invention, la paroi commune s'étend à partir des parois de fond des réceptacles et a une hauteur inférieure au niveau de remplissage du réceptacle d'entrée et est disposé au-dessus de la paroi commune un agencement dit de cloche, formant de part et d'autre de la paroi commune un premier et un second réceptacles intermédiaires, le premier réceptacle intermédiaire communiquant avec le réceptacle d'entrée par un premier passage s'étendant le long du fond de celui-ci, le second réceptacle intermédiaire communiquant avec le réceptacle de sortie par un deuxième passage s'étendant le long du fond de celui-ci, ces deux réceptacles intermédiaires communiquant entre eux par un troisième passage s'étendant au-dessus de la paroi commune où est maintenue une pression de gaz, étant outre, ces trois passages, fermés et étant reliés à un dispositif de maintien de ladite pression de gaz.

Selon un mode de réalisation préféré, lesdits fonds sont horizontaux et les réceptacles intermédiaires symétriques par rapport à la paroi commune.

Avantageusement, l'ouverture de sortie est à la même hauteur que le bord supérieur de la paroi commune.

De préférence, le dispositif de maintien de la pression de gaz comporte un dispositif d'alimentation en gaz et un dispositif de fuite de gaz, l'un de ces dispositifs étant régulé.

Selon une première variante, le dispositif d'alimentation en gaz est relié au niveau le plus haut de l'agencement de cloche.

Selon une seconde variante, le dispositif d'alimentation en gaz est relié auxdits fonds de part et d'autre de la paroi commune.

Avantageusement, ledit troisième passage est constitué d'une pluralité d'orifices.

L'application préférée du dispositif décrit ci-dessus est la réalisation d'une valve de régulation de sortie de solides fluidisés d'une chaudière de lit fluidisé.

Les fonctions et avantages de ces différentes caractéristiques apparaîtront à la lecture de la description suivante illustrée d'une figure qui ne représente qu'un mode de réalisation préféré de l'invention.

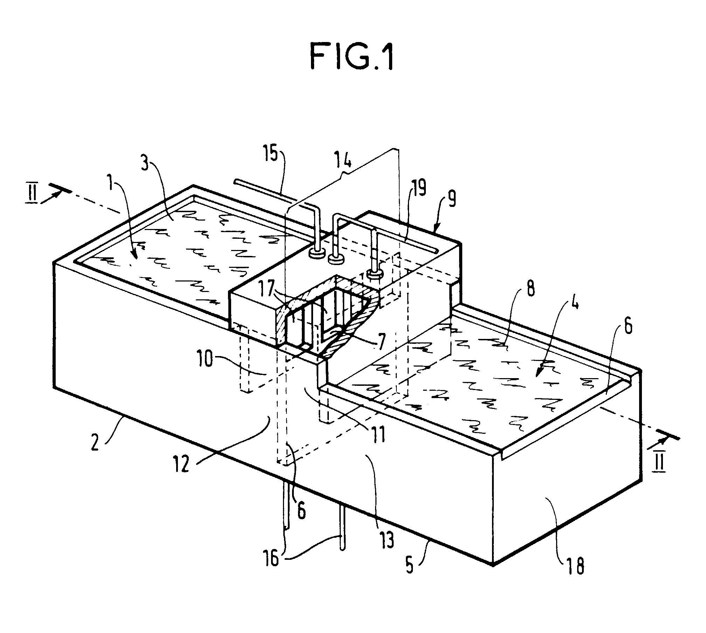

La figure 1 représente une vue en perspective d'un dispositif conforme à l'invention.

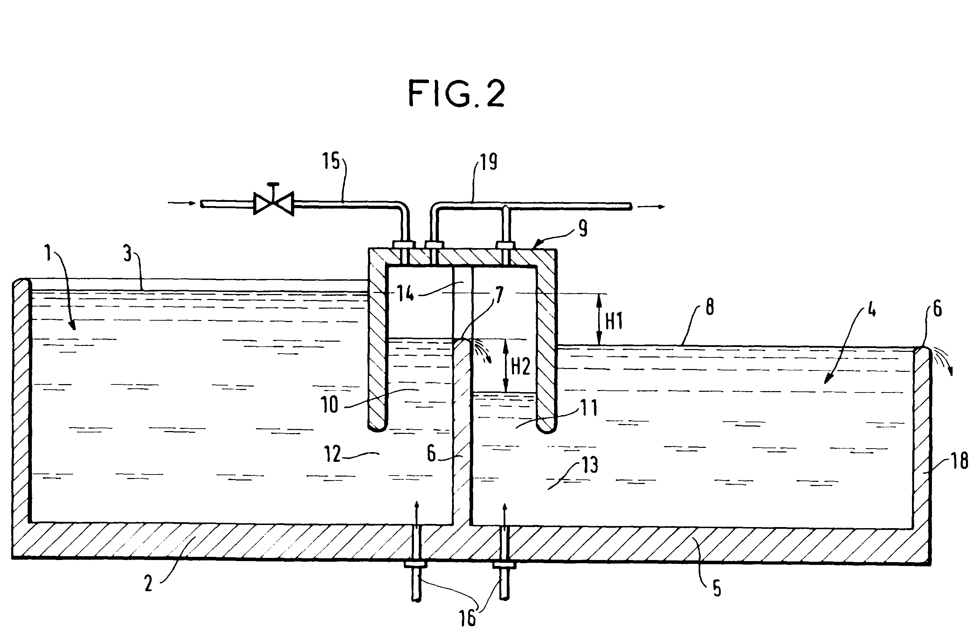

La figure 2 représente une vue en coupe suivant II-II du même dispositif.

Le dispositif de régulation du débit d'une matière fluide conforme à l'invention comporte un réceptacle d'entrée 1 de la matière comprenant une paroi de fond 2 horizontale, recevant la matière déversée à un débit quelconque et la contenant selon un niveau de remplissage 3 et un réceptacle de sortie 4 comprenant une paroi de fond 5 horizontale et libérant la matière à un débit régulé par une ouverture de sortie 6 qui est formée par le bord supérieur d'une de ses parois verticales dite paroi de déversement 18. Les parois de fond 2, 5 peuvent être au même niveau comme représenté sur les figures ou à des niveaux différents.

Ces deux réceptacles 1, 4 sont séparés par une paroi commune 6 verticale comportant un bord supérieur 7 de même hauteur que la paroi de déversement 18 et la surface libre de la matière 3, 8 dans ces deux réceptacles 1, 4 est soumise, selon le mode de réalisation préféré, à une même pression de gaz qui est ,selon l'exemple représenté, la pression atmosphérique, les réceptacles 1, 4 étant ouverts. Dans ce cas, l'on a H1=H2. Cependant le dispositif fonctionne également si la surface libre 3, 8 dans les réceptacles 1, 4 est soumise à des pressions différentes et alors H1 est différent de H2.

La paroi commune 6 s'étend à partir des parois de fond 2, 5 des réceptacles 1, 4 et a une hauteur inférieure au niveau de remplissage 3 du réceptacle d'entrée 1. Au-dessus de la paroi commune 6 est disposé un agencement dit de cloche 9, formant de part et d'autre de la paroi commune 6 un premier 10 et un second 11 réceptacles intermédiaires symétriques par rapport à cette paroi commune 6. Le premier réceptacle intermédiaire 10 communique avec le réceptacle d'entrée 1 par un premier passage 12 s'étendant le long du fond 2 de celui-ci, le second réceptacle intermédiaire 11 communique avec le réceptacle de sortie 4 par un deuxième passage 13 s'étendant le long du fond 5 de celui-ci et ces deux réceptacles intermédiaires 10, 11 communiquent entre eux par un troisième passage 14 s'étendant au-dessus de la paroi commune 6. Outre ces trois passages 12, 13, 14, ces réceptacles intermédiaires 10, 11 sont fermés et il y est maintenu une pression de gaz P grâce à un dispositif 15, 16, 19 de maintien de la pression de gaz P.

Le dispositif de maintien de la pression P peut être constitué d'une alimentation en gaz 15 reliée au niveau le plus haut de l'agencement de cloche 9. Alternativement ou cumulativement, il peut être constitué d'une autre alimentation en gaz 16 reliée auxdits fonds 2, 5 de part et d'autre de la paroi commune 6. Cette autre variante est particulièrement adapté à la régulation de solides fluidisés ce gaz servant également de gaz de fluidisation. Par ailleurs, est également connecté à la cloche 9 un circuit 19 de fuite du gaz. Le réglage de la pression P se fait donc soit à débit régulé de gaz et fuite constante soit à débit constant et à fuite régulée.

Avantageusement, ledit troisième passage 14 est constitué d'une pluralité d'orifices 17 permettant une meilleure stabilité du fonctionnement. En effet dans le cas de solides fluidisés, ce déversoir constitué d'orifices empêche l'éventuel passage brutal d'un agglomérat au-dessus du bord 7 de la paroi commune.

Eventuellement, il est possible de réguler le niveau du réceptacle d'entrée 1 grâce à un déversoir.

Le fonctionnement de ce dispositif est le suivant.

Lorsque de la matière fluide arrive dans le réceptacle d'entrée 1 à un débit quelconque, une certaine quantité de matière est transmise au premier réceptacle intermédiaire 10, cette quantité étant déterminée par la pression P fixée de régulation du débit. La matière se déversant au-dessus de la paroi commune 7 a donc un débit constant et celle qui se déverse au-dessus de la paroi de déversement 18 également.

Le dispositif conforme à l'invention est particulièrement destiné à constituer un valve de régulation de sortie de solides fluidisés d'une chaudière de lit fluidisé. Une application spécifique est le traitement des solides fluidisés s'écoulant sur la paroi interne de la chaudière, récupérés en partie basse de celle-ci et recyclés dans un échangeur. Cet échangeur doit être alimenté selon un débit constant et la valve selon l'invention est disposée en amont de celui-ci. De façon générale les valves couramment utilisées dans ce domaine sont détériorées très rapidement du fait des conditions thermiques de fonctionnement. Il est évident que le dispositif de régulation décrit est très peu sensible aux effets de la température.

## Revendications

1. Dispositif de régulation du débit d'une matière fluide comportant un réceptacle d'entrée (1) de la matière comprenant une paroi de fond (2), recevant la matière déversée à un débit quelconque et la contenant selon un niveau de remplissage (3) et un réceptacle de sortie (4) comprenant une paroi de fond (5) et libérant la matière à un débit régulé par une ouverture de sortie (6), ces deux réceptacles (1, 4) étant séparés par une paroi commune (6) comportant un bord supérieur (7), dispositif caractérisé en ce que la paroi commune (6) s'étend à partir des parois de fond (2, 5) des réceptacles (1, 4) et a une hauteur inférieure au niveau de remplissage (3) du réceptacle d'entrée (1) et en ce qu'est disposé au-dessus de la paroi commune (6) un agencement dit de cloche (9), formant de part et d'autre de la paroi commune (6) un premier (10) et un second (11) réceptacles intermédiaires, le premier réceptacle intermédiaire (10) communiquant avec le réceptacle d'entrée (1) par un premier passage (12) s'étendant le long du fond (2) de celui-ci, le second réceptacle intermédiaire (11) communiquant avec le réceptacle de sortie (4) par un deuxième passage (13) s'étendant le long du fond (5) de celui-ci, ces deux réceptacles intermédiaires (10, 11) communiquant entre eux par un troisième passage (14) s'étendant au-dessus de la paroi commune (6) où est maintenue une pression de gaz (P), étant, outre ces trois passages (12, 13, 14), fermés et étant reliés à un dispositif (15, 16) de maintien de la pression de gaz (P).

2. Dispositif selon la revendication 1, caractérisé en ce que lesdits fonds (2, 5) sont horizontaux et les réceptacles intermédiaires (10, 11) symétriques par rapport à la paroi commune (6).

3. Dispositif selon la revendication 2, caractérisé en ce que l'ouverture de sortie (6) est à la même hauteur que le bord supérieur (7) de la paroi commune (6).

4. Dispositif selon l'une des revendications précédentes, caractérisé en ce que le dispositif de maintien de la pression de gaz comporte un dispositif d'alimentation en gaz (15, 16) et un dispositif de fuite de gaz (19), l'un de ces dispositifs étant régulé.

5. Dispositif selon le revendication 4, caractérisé en ce que le dispositif (15) d'alimentation en gaz est relié au niveau le plus haut de l'agencement de cloche (9).

6. Dispositif selon la revendication 4 ou 5, caractérisé en ce que le dispositif (16) d'alimentation en gaz est relié auxdits fonds (2, 5) de part et d'autre de la paroi commune (6).

7. Dispositif selon l'une des revendications précédentes, caractérisé en ce que ledit troisième passage (14) est constitué d'une pluralité d'orifices (17).

8. Valve de régulation de sortie de solides fluidisés d'une chaudière de lit fluidisé constitué d'un dispositif selon l'une des revendications précédentes.

## Patentansprüche

1. Durchflußmengenregelvorrichtung für fließfähiges Material, die einen eine Bodenwand (2) umfassenden Eintrittsbehälter (1) für das Material, der das mit irgendeiner Menge geschüttete Material umfaßt und in Übereinstimmung mit einer Füllhöhe (3) enthält, und einen Austrittsbehälter (4) aufweist, der eine Bodenwand (5) umfaßt und das Material mit einer regulierten Durchflußmenge durch eine Austrittsöffnung (6) freigibt, wobei diese beiden Behälter (1, 4) durch eine gemeinsame Wand (6) getrennt sind, die einen oberen Rand (7) aufweist, dadurch gekennzeichnet, daß die gemeinsame Wand (6) sich von den Bodenwänden (2, 5) der Behälter (1, 4) weg erstreckt und eine Höhe hat, die geringer als die Füllhöhe (3) des Eintrittsbehälters (1) ist, und daß eine Einrichtung, Glocke (9) genannt, über der gemeinsamen Wand (6) angeordnet ist, die beiderseits der gemeinsamen Wand (6) einen ersten (10) und einen zweiten Zwischenbehälter (11) bildet, wobei der erste Zwischenbehälter (10) mit dem Eintrittsbehälter (1) über einen ersten Durchgang (12) in Verbindung steht, der sich entlang dessen Boden (2) erstreckt, der zweite Zwischenbehälter (11) mit dem Austrittsbehälter (4) über einen zweiten Durchgang (13) in Verbindung steht, der sich entlang dessen Boden (5) erstreckt, in Verbindung steht, wobei diese beiden Zwischenbehälter (10, 11) untereinander über einen dritten Durchgang (14) in Verbindung stehen, der sich über der gemeinsamen Wand (6) erstreckt, wo ein Gasdruck (P) aufrechterhalten wird, wobei sie abgesehen von den drei Durchgängen (12, 13, 14) geschlossen und mit einer Vorrichtung (15, 16) zur Aufrechterhaltung des Gasdrucks (P) verbunden sind.

2. Vorrichtung nach Anspruch 1, dadurch gekennzeichnet, daß die Böden (2, 5) horizontal und die Zwischenbehälter (10, 11) in bezug auf die gemeinsame Wand (6) symmetrisch sind.

3. Vorrichtung nach Anspruch 2, dadurch gekennzeichnet, daß sich die Austrittsöffnung (6) in derselben Höhe wie der obere Rand (7) der gemeinsamen Wand (6) befindet.

4. Vorrichtung nach einem der vorhergehenden Ansprüche, dadurch gekennzeichnet, daß die Vorrichtung zur Aufrechterhaltung des Gasdrucks eine Vorrichtung (15, 16), für die Gaszufuhr und eine Vorrichtung (19) für das Entweichen des Gases aufweist, wobei eine dieser Vorrichtungen geregelt ist.

5. Vorrichtung nach Anspruch 4, dadurch gekennzeichnet, daß die Vorrichtung (15) für die Gaszufuhr mit der höchsten Ebene der Glockeneinrichtung (9) verbunden ist.

6. Vorrichtung nach Anspruch 4 oder 5, dadurch gekennzeichnet, daß die Vorrichtung (16) für die Gaszufuhr mit den Böden (2, 5) beiderseits der gemeinsamen Wand (6) verbunden ist.

7. Vorrichtung nach einem der vorhergehenden Ansprüche, dadurch gekennzeichnet, daß der dritte Durchgang (14) aus einer Vielzahl von Öffnungen (17) besteht.

8. Austrittsregelventil für fluidisierte Feststoffe aus einem Wirbelbettkessel, das aus einer Vorrichtung nach einem der vorhergehenden Ansprüchen besteht.

## Claims

1. A device for regulating the flow rate of a fluid, the device comprising an inlet receptacle (1) for the fluid, which receptacle comprises a bottom wall (2) and receives the fluid that is delivered at an arbitrary rate, the receptacle containing the fluid up to a fill-up level (3), the device further including an outlet receptacle (4) which has a bottom wall (5) and which releases fluid at a regulated flow rate via an outlet opening (6), the two receptacles (1, 4) being separated from each other by a common wall (6) that includes a top edge (7), the device being characterized in that the common wall (6) extends from the bottom walls (2, 5) of the receptacles (1, 4) to a height that is lower than the fill-up level (3) of the inlet receptacle (1), and in that a "bell" contrivance (9) is disposed over the common wall (6) to form first and second intermediate receptacles (10, 11) on either side of the common wall (6), the first intermediate receptacle (10) communicating with the inlet receptacle (1) via a first passage (12) extending along the bottom (2) thereof, the second intermediate receptacle (11) communicating with the outlet receptacle (4) via a second passage (13) extending along the bottom (5) thereof, the two intermediate receptacles (10, 11) communicating with each other via a third passage (14) extending over the common wall (6) where a gas pressure (P) is maintained, the two intermediate receptacles being closed [apart from said three passages (12, 13, 14)] and being connected to a device (15, 16) for maintaining the gas pressure (P).

2. A device according to claim 1, characterized in that said bottoms (2, 5) are horizontal, and the intermediate receptacles (10, 11) are symmetrical about the common wall (6).

3. A device according to claim 2, characterized in that the outlet opening (6) has the same height as the top edge (7) of the common wall (6).

4. A device according to any preceding claim, characterized in that the device for maintaining the gas pressure comprises a gas feed device (15, 16) and a gas leakage device (19), one of said devices being regulated.

5. A device according to claim 4, characterized in that the gas feed device (15) is connected to the topmost level of the "bell" contrivance (9).

6. A device according to claim 4 or 5, characterized in that the gas feed device (16) is connected to the bottoms (2, 5) on either side of the common wall (6).

7. A device according to any preceding claim, characterized in that said third passage (14) is constituted by a plurality of orifices (17).

8. A valve for regulating the outflow of fluidized solids from a fluidized bed boiler, the valves being constituted by a device according to any preceding claim.
